# EUROPÄISCHE PATENTANMELDUNG

(11) **EP 0 661 507 A1**
(43) Veröffentlichungstag der Anmeldung: **05.07.1995**
(21) Anmeldenummer: 94250260.0
(22) Anmeldetag: 21.10.1994
(51) Int. Cl.: F27D 17/00, C22B 5/16, C22B 7/02, B01D 53/64

(54) **Verfahren und Vorrichtung zur Ausscheidung von Schwermetallen und schwermetallhaltigen Verbindungen**

(30) Priorität: 07.12.1993 DE 4342494
(71) Anmelder: MANNESMANN Aktiengesellschaft, D-40213 Düsseldorf (DE)
(72) Erfinder: Ulrich, Klaus Herbert, D-42579 Heiligennaus (DE)
(74) Vertreter: Meissner, Peter E., Dipl.-Ing.

(57) **Zusammenfassung**

Die Erfindung betrifft ein Verfahren zur Ausscheidung von Schwermetallen und schwermetallhaltigen Verbindungen aus dem Abgas metallurgischer, mit Problemstoffen beschickter Gefäße, die mit einer Gasreinigungsanlage unmittelbar in Verbindung stehen und die Gasnachverbrennungseinrichtungen zugeführt werden.

Das Verfahren ist erfindungsgemäß gekennzeichnet durch folgende Schritte:
a) das sich im metallurgischen Gefäß ansammelnde Rauchgas wird aus diesem abgesaugt und gereinigt.
b) ein in seiner Menge einstellbarer Teil des vom Staub gereinigten Abgases wird vom der Nachverbrennung zuzuführenden Hauptgasstrom abgezweigt und über einen Kühler geführt.
c) der abgekühlte Teilstrom des Reingases wird dem Rauchgas vor seinem Eintritt in die Gasreinigungsanlage zugemischt.

## Beschreibung

Die Erfindung betrifft ein Verfahren zur Ausscheidung von Schwermetallen und schwermetallhaltigen Verbindungen aus dem Abgas metallurgischer, mit Problemstoffen beschickter Gefäße, die mit einer Gasreinigungsanlage unmittelbar in Verbindung stehen und die einer Gasnachverbrennungseinrichtung zugeführt werden, sowie der zur Durchführung des Verfahrens erforderlichen Einrichtung.

Bei metallurgischen Hochtemperaturprozessen, insbesondere beim Einschmelzen von nichteisenmetallhaltigen Reststoffen, werden Anteile der schwermetallhaltigen Verbindungen oder die Schwermetalle selbst bei den vorherrschenden Temperaturen von über 1000^{o} C verflüchtigt. Um eine Trennung in deponiefähige Schlacke, in wiederverwendbare Metalllegierung und in Filterstaub zu erreichen, wird bei den Reststoffentsorgungsprozessen diese Verflüchtigungsreaktion gezielt über eine Einstellung des Sauerstoffpotentials in der im metallurgischen Gefäß sich befindenden Schmelze angestrebt. Bei diesen Prozessen wird der Filterstaub aus den Prozeßabgasen abgeschieden.

Dieser Staub enthält möglichst vollständig und konzentriert die schwermetallhaltigen Problemstoffe, die in dieser konzentrierten Form in separaten Verfahren in einfacher Weise und dabei kostengünstig entsorgt werden können.
Die Gase, die die bei diesen metallurgischen Prozessen entstehenden Metall- bzw. Metallverbindungen enthaltenden Dämpfe aufweisen, sind vor der Einleitung in Filteranlagen zu kühlen. Hierbei führt die direkte Kühlung des Gases durch Spritzwasser zur Erhöhung des Wasserdampfgehaltes im Gas und damit zur Erniedrigung des Taupunktes. Problematisch wird dieses Verfahren, wenn im Filter hygroskopische Stäube (z. B. Metallchloride, -carbonate oder -sulfate) ausgeschieden werden sollen, da diese begierig Wasser aufnehmen und damit die Filterflächen verkleben.
In der Schrift EP 0 158 689 wurde bereits auf die Nachteile dieses nassen Gassystems zur Reinigung von Rauchgasen hingewiesen und eine trockene, Gaswirtschaft vorgeschlagen, bei der das Gichtgas entschwefelt wird, in dem das warme, ungereinigte Gichtgas in eine dem Ofen unmittelbar nachgeordneten, mit Verbrennungsluft beschickten Brennkammer verbrannt wird. Hierbei war es bereits bekannt, daß auch bei der trockenen Gaswirtschaft Verschmutzungen und Verkrustungen der Rohrbündel bei den eingesetzten Rekuperatoren auftreten. Es kondensiert nämlich bei dieser indirekten Kühlung die im Abgas enthaltenen Fettstoffe an den Kühlflächen, dort wachsen sie schichtförmig auf und behindern in zunehmender Dicke den Kühleffekt und verursachen durch Verengungen der Abgasführungsquerschnitte eine Erhöhung des Druckabfalls im gesamten Abgassystem bis im Extremfall kein Gas mehr abgesaugt werden kann. Aus dieser Schrift EP 0 158 689 ist ein Verfahren und, eine Vorrichtung bekannt, bei dem das warme, ungereinigte Gichtgas in mit, Verbrennungsluft beschickten Brennkammern verbrannt wird und dabei ein pulverförmiges Entschwefelungsmittel in die Brennkammer eingegeben wird. Als Träger des pulverförmigen Mittels wird Luft von niedriger Temperatur eingesetzt, so daß das Rauchgas mit dem eingeblasenen Gut, also der Trägerluft und dem Entschwefelungsmittel, hierbei gekühlt wird.
Nachteil dieses Verfahrens ist der Einsatz großer Gasmengen, nämlich des Rauchgases und der zugesetzten Verbrennungsluft, die erst nach der Nachverbrennung der Gasreinigung zugeführt wird. Darüber hinaus wird dem Rauchgas noch ein fremdes Gas, nämlich Frischluft zugesetzt, was zu nicht kontrollierbaren chemischen Reaktionen der problembelasteten Stoffe führen kann.

Weiterhin ist aus der Schrift EP 0 299 340 B1 ein Verfahren zum Entfernen von Schwermetallen und/oder Schwermetallverbindungen bekannt, bei dem Filterstaub in einem Reaktionsgefäß mindestens bis zur Verdampfungstemperatur der zu entfernenden Schwermetalle und/oder Schwermetallverbindungen erhitzt wird, und bei dem zumindest die dampfförmigen metallischen Stoffe anschließend in einem Kühler angeschreckt und in den flüssigen oder festen Zustand überführt werden, wobei vor der Verdampfung dieser Stoffe Feinststaubteilchen mit Partikelgrößen kleiner als 5 nm im kalten Zustand abgeschieden werden und der restliche Filterstaubanteil dem Reaktionsgefäß zugeführt wird. Hierbei wird der Rohstaub dem Reaktionsgefäß direkt zugegeben und das Rauchgas wird mittels eines Kühlers abgekühlt mit den oben bereits geschilderten Nachteilen des schichtweisen Zuwachsens der Kühlflächen.

Die Erfindung hat sich das Ziel gesetzt, ein Verfahren und eine dazu erforderliche Einrichtung zum Ausscheiden von Schwermetallen und schwermetallhaltigen Verbindungen anzugeben, bei dem mit einfachen Mitteln bei einem Minimum von zu reinigendem Rauchgas bei Vermeidung von Anbackungen im Gasführungssystem aus metallurgischen Gefäßen stammendes Gas gereinigt und nachverbrannt werden kann.
Dieses Ziel wird erreicht durch die kennzeichnenden Merkmale der Ansprüche 1 und 4.
Erfindungsgemäß wird das das metallurgische Gefäß verlassende Rauchgas durch Eigenmedium gekühlt. Dieses Eigenmedium ist gereinigtes Gas, das hinter der Filteranlage, in einem Teilstrom abgezogen wird. Dieser Teilstrom des gereinigten Gases wird gekühlt und in Strömungsrichtung vor dem Filter dem Rauchgas wieder zugemischt.
Ein Kontakt mit Kühlwasser entfällt. Schwierigkeiten aus zugemischtem fremdem Gas, beispielsweise von Luft, entfallen ebenfalls, da im Falle des Zumischens von Luft der darin enthaltene Sauerstoff mit brennbaren Bestandteilen der Ofenabgase reagieren würde, was dem Ziel einer Abkühlung der Ofengase entgegenstehen würde. Die üblicherweise auftretenden Anbackungen treten bei dem Einsatz von gereinigtem Gas nicht auf.
Als Kondensationskeime wirken die Staubpartikel, die sich im Rauchgas befinden.Sollte der Staubgehalt des ungekühlten Rauchgases hierfür nicht ausreichen, so kann Staub zugemischt werden. Es wird vorgeschlagen, daß diese zugemischten feinsten Staubpartikel eine Korngröße von < 0,1 mm aufweisen und in einer Menge zugemischt werden zwischen 1 - 5 g/Nm³. Durch diese Kondensation der flüchtigen Metallverbindungen an Staubpartikeln, bei gleichzeitiger Abkühlung der Gase unterhalb einer Temperatur, die zum Aufsintern der Partikel an Wandflächen der Gasleitungen führen kann, wird vermieden, daß Kondensate sich an diesen Wandflächen niederschlagen.

Der Staub wird dabei aus einem Silo dosiert einer pneumatischen Förderung zugeführt, welche ebenfalls Eigenmedium benutzt, und zwar eine Teilmenge aus dem gekühlten und gereinigten Rückführungsgas.

Eine Vergrößerung des das metallurgische Gefäß verlassenden Gasvolumens tritt nicht auf, weil zur Kühlung das Eigenmedium, hier in gereinigter Form, verwendet wird. In entsprechender Weise können die konstruktiven und baulichen Maßnahmen getroffen werden.

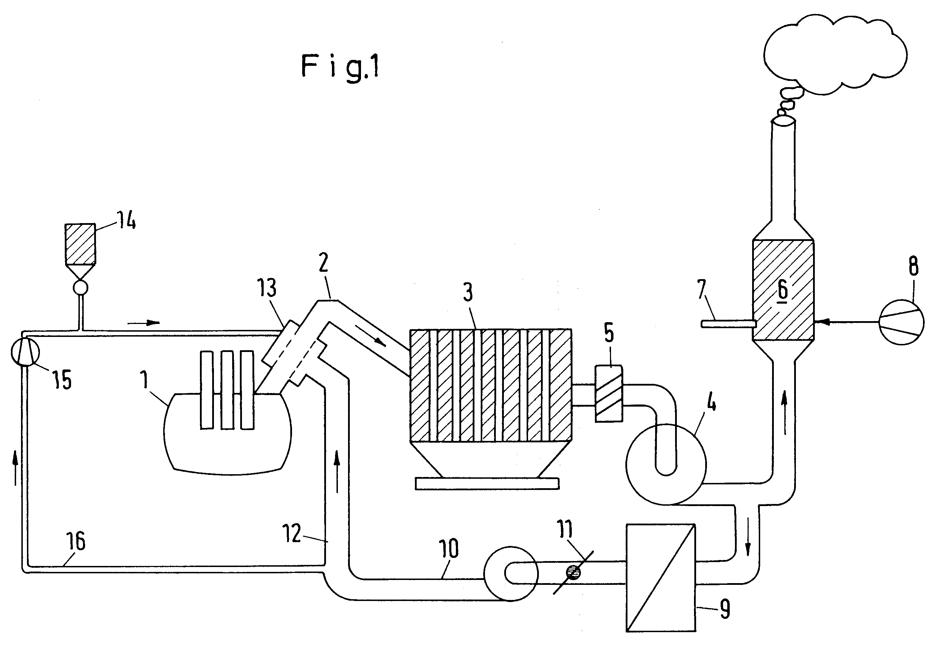

Ein Beispiel der Erfindung zeigt die beigefügte Zeichnung. Hierbei stellt die Figur 1 das Schema der vorgeschlagenen Einrichtung dar.

Hierbei ist das als Elektrolichtbogenofen dargestellte metallurgische Gefäß 1 über eine Rohrgasleitung 2 mit einem Filter 3 verbunden. In Strömungsrichtung des Rauchgases hinter dem Filter ist ein Abgasgebläse 4 angeordnet, wobei zur Abgasmengenregelung zwischen Filter 3 und dem Abgasgebläse 4 ein Stellschieber 5 vorgesehen ist. In Strömungsrichtung des Rauchgases hinter dem Abgasgebläse ist eine Abzweigung 12 vorgesehen, über die durch ein Gebläse 10 eine Teilmenge des gereinigten Abgases geführt wird. Diese Teilgasmenge wird über einen Kühler 9 abgekühlt und durch einen Stellschieber 11 in seiner Rückführungsmenge geregelt.

Das nicht rückgeführte Gas wird einer Nachbrennkammer 6 zugeführt und von dort ins Freie geleitet, oder (hier nicht dargestellt) als fühlbare Wärme weiterverwandt, beispielsweise zur Schrottvorwärmung oder ähnlichem. Zur Nachverbrennung sind mit der Nachbrennkammer 6 ein Stützbrenner 7 und ein Verbrennungsluftgebläse 8 verbunden.

Die gereinigte und gekühlte zurückgeführte Teilmenge wird über die Leitung 12 in eine Zumischeinrichtung 13 dem durch die Rohgasleitung 2 dem Filter 3 zuströmenden Rauchgas zugemischt.

In Strömungsrichtung des gekühlten Abgases vor der Zumischung 13 wird über eine Förderleitung 16 eine Teilmenge durch ein Gebläse 15 zur pneumatischen Förderung von Staub zur Zumischeinrichtung 13 abgezogen, wobei die Förderleitung 16 mit einem eine Dosiereinrichtung aufweisenden Staubsilo 14 in Verbindung steht.

### Positionsliste:

- 1.: metallurgisches Gefäß
- 2.: Rohgasleitung zum Filter
- 3.: Filter
- 4.: Abgasgebläuse -
- 5.: Stellschieber zur Abgasmengenreglung
- 6.: Nachbrennkammer
- 7.: Stützbrenner
- 8.: Verbrennungsluftgebläse
- 9.: Kühler für rückgeführtes Abgas
- 10.: Gebläse für rückgeführtes Abgas
- 11.: Stellschieber für Rückgasmengenregelung
- 12.: Leitung für kaltes und rückgeführtes Abgas
- 13.: Zumischungskammer
- 14.: Staubzufuhreinrichtung
- 15.: Gebläse zur pneumatischen Förderung von Staub
- 16.: pneumatische Förderleitung

## Patentansprüche

1. Verfahren zur Ausscheidung von Schwermetallen und schwermetallhaltigen Verbindungen aus dem Abgas metallurgischer, mit Problemstoffen beschickter Gefäße, die mit einer Gasreinigungsanlage unmittelbar in Verbindung stehen und die Gasnachverbrennungseinrichtungen zugeführt werden, gekennzeichnet durch folgende Schritte:
a) das sich im metallurgischen Gefäß ansammelnde Rauchgas wird aus diesem abgesaugt und gereinigt.
b) ein in seiner Menge einstellbarer Teil des vom Staub gereinigten Abgases wird vom der Nachverbrennung zuzuführenden Hauptgasstrom abgezweigt und über einen Kühler geführt.
c) der abgekühlte Teilstrom des Reingases wird dem Rauchgas vor seinem Eintritt in die Gasreinigungsanlage zugemischt.

2. Verfahren nach Anspruch 1,
dadurch gekennzeichnet,
daß der Teilstrom des gekühlten Reingases beim Zumischen eine Zutrittsgeschwindigkeit aufweist, die mindestens so groß ist wie die dreifache Strömungsgeschwindigkeit des Rauchgases.

3. Verfahren nach 1 oder 2,
dadurch gekennzeichnet,
daß dem Rauchgas nach Verlassen des metallurgischen Gefäßes und/oder dem Teilstrom des Reingases Staubpartikel mit einer Korngröße < 0,1 mm zugegeben werden.

4. Einrichtung zum Ausscheiden von Schwermetallen und schwermetallhaltigen Verbindungen mit einem metallurgischen Gefäß, an das eine Gasreinigungsanlage angeschlossen ist, die mit einer Absaugung sowie einer Nachverbrennungsanlage in Verbindung steht, zur Durchführung des Verfahrens nach Anspruch 1,
dadurch gekennzeichnet,
daß in Strömungsrichtung hinter dem Filter (3) eine Abzweigleitung (12) zur Gasrückführung des Reingases vorgesehen ist, an die ein Gebläse (10) zur Förderung des abgezweigten Gases angeschlossen ist,
daß die Abzweigleitung (12) mit einem Kühler (9) zur Abkühlung des abgezweigten Reingases versehen ist, und
daß die Abzweigleitung (12) in der Rauchgaszuleitung (2) zum Filter (3) mündet.

5. Einrichtung nach Anspruch 4,
dadurch gekennzeichnet
daß die Mündung der Abzweigleitung (12) in die Rauchgasleitung (2) als Zumischkammer (13) ausgebildet ist, die ein die Rauchgasleitung umgreifendes Gehäuse aufweist.

6. Einrichtung nach Anspruch 5,
dadurch gekennzeichnet,
daß in der der Rauchgasleitung (2) zugeneigten Wand der Zumischkammer (13) Öffnungen zur Durchströmung des Reingases vorgesehen sind.

7. Einrichtung nach Anspruch 6,
dadurch gekennzeichnet,
daß die Öffnungen der Rauchgasleitung (2) als Schlitze ausgebildet sind.

8. Einrichtung nach Anspruch 7,
dadurch gekennzeichnet,
daß an den Schlitzrändern der Öffnungen der Rauchgasleitung (12) Elemente zur Durchwirbelungsverstärkung des Reingases mit dem Rauchgas vorgesehen sind.

9. Einrichtung nach 4,
dadurch gekennzeichnet,
daß die Zumischkammer (13) des Reingases zum Rauchgas mit einer Staubzufuhreinrichtung (14) zum dosierten Zuschmischen von Staubpartikeln zum Gas verbunden ist.

10. Einrichtung nach Anspruch 9,
dadurch gekennzeichnet,
daß die Staubzufuhreinrichtung (14) an eine pneumatische Förderleitung (16), in der ein Geblase (15) vorgesehen ist und die einenends mit der Leitung (12) und andernends mit der Zumischungskammer (13) in Verbindung steht, angeschlossen ist.
